# FASCICULE DE BREVET EUROPEEN

(11) **EP 3 254 880 B1**
(45) Date de publication et mention de la délivrance du brevet: **13.03.2019**
(21) Numéro de dépôt: 17173205.0
(22) Date de dépôt: 29.05.2017
(51) Int. Cl.: B60K 13/02, F02B 29/04

(54) **ENSEMBLE DE DEUX CONDUITS A CIRCULATION D'AIR OPPOSEE ENTRE MOTEUR ET REFROIDISSEUR D'AIR DE SURALIMENTATION**
EINHEIT AUS ZWEI LEITUNGEN FÜR ENTGEGENGESETZTE LUFTSTRÖMUNGEN ZWISCHEN EINEM MOTOR UND EINEM LADELUFTKÜHLER
ASSEMBLY OF TWO CONDUITS OF OPPOSING AIR FLOW BETWEEN AN ENGINE AND A CHARGE AIR COOLER

(30) Priorité: 07.06.2016 FR 1655189
(43) Date de publication de la demande: 13.12.2017
(73) Titulaire: PSA Automobiles SA, 78300 Poissy (FR)
(72) Inventeur: DORE, MARTIAL, 78150 LE CHESNAY (FR)

(56) Documents cités:
- DE-T5-112015 000 037
- FR-A1- 2 921 690
- US-A1- 2013 146 378
- US-A1- 2015 361 933

## Description

L'invention porte sur un ensemble de deux conduits avec circulation d'air opposée dans un conduit par rapport à l'autre conduit, les conduits étant destinés à s'étendre dans leur longueur entre un moteur à combustion interne et un refroidisseur d'air de suralimentation en étant assemblés à leurs extrémités respectivement au moteur à combustion interne et au refroidisseur d'air.

Le moteur à combustion à interne porte un turbocompresseur qui lui est solidarisé. Le refroidisseur d'air de suralimentation est alimenté par un premier conduit acheminant de l'air en provenance du turbocompresseur pour le refroidir dans le refroidisseur d'air de suralimentation. L'air est ensuite redirigé par un deuxième conduit vers une admission d'air du moteur à combustion interne.

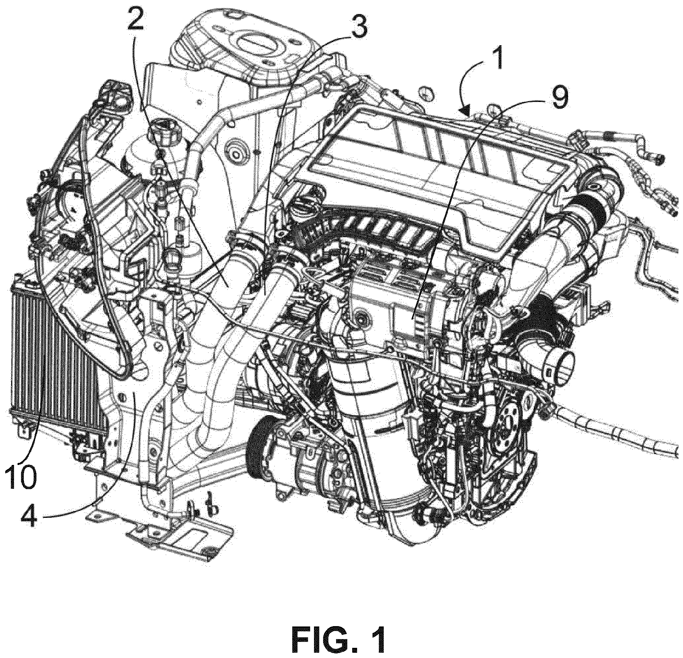

Selon l'état de la technique, en se référant à la figure 1 qui montre un groupe motopropulseur d'un véhicule automobile avec un moteur 1 à combustion interne et un turbocompresseur 9 solidarisé au moteur 1, deux conduits 2, 3 d'air, reliant dans deux directions opposés le moteur 1 à combustion interne ou le turbocompresseur 9 à un refroidisseur d'air 10 de suralimentation, sont dissociés et souples.

Le refroidisseur d'air de suralimentation est fixé sur le véhicule automobile. Par contre, en mode roulage, le moteur 1 à combustion interne débat dans le compartiment avant du véhicule. Il est donc nécessaire de découpler dynamiquement, via ces deux conduits 2, 3 souples, les éléments fixes dans le véhicule comme le refroidisseur d'air 10 de suralimentation, des éléments comme le moteur 1 ou supportés par le moteur 1 comme le turbocompresseur 9 qui débattent.

Dans ce contexte, afin que les différents éléments n'entrent pas en contact les uns avec les autres, il est nécessaire de prédisposer entre chacun des deux conduits 2, 3 un jeu, par exemple de 25mm. De même, il est impératif de prévoir entre chacun de ces deux conduits 2, 3 et, d'une part, les éléments fixes dans le véhicule et, d'autre part, les éléments du moteur 1 des jeux de l'ordre de 25mm également.

Comme ces conduits 2, 3 peuvent présenter un diamètre extérieur de 50mm, en ajoutant 25mm de jeu entre les deux conduits 2, 3, un jeu de 25mm entre les conduits 2, 3 et la structure du véhicule et enfin un jeu de 25mm entre les conduits 2, 3 et le moteur 1 et les éléments solidarisés au moteur 1, ceci rend délicat, voire impossible, d'implanter ces deux conduits 2, 3 dans un environnement restreint qui leur est destiné.

Le document EP-A-1 846 652 décrit un dispositif de recirculation de gaz d'échappement d'un moteur à combustion interne suralimenté d'un véhicule automobile. Ce dispositif comprend une conduite d'aspiration servant à acheminer de l'air comprimé jusqu'au moteur à combustion interne. La conduite d'aspiration présente un refroidisseur d'air de suralimentation conçu pour refroidir l'air.

Le dispositif comporte, également, une conduite de retour qui relie la conduite d'échappement à la conduite d'aspiration, de telle manière qu'il est possible, par l'intermédiaire de la conduite de retour, de faire recirculer les gaz d'échappement provenant de la conduite d'échappement jusqu'à la conduite d'aspiration.

Dans ce document, les conduites de retour et d'aspiration ne sont pas jumelées et le problème d'encombrement des deux conduites avec les jeux nécessaires entre elles et les divers éléments de leur environnement n'est pas évoqué.

Un véhicule automobile selon le préambule de la revendication 1 est connu du document FR 2 921 690 A1.

Au contraire, le problème à la base de l'invention est, pour un véhicule automobile comportant un moteur à combustion interne turbocompressé, de concevoir deux conduits d'air proches l'un de l'autre qui occupent un minimum de place en reliant un groupe motopropulseur comprenant un moteur et un turbocompresseur solidarisé au moteur avec un refroidisseur d'air de suralimentation monté fixe dans le véhicule automobile.

Pour atteindre cet objectif, il est prévu selon l'invention un véhicule automobile selon la revendication 1.

L'effet technique est de supprimer les jeux nécessaires entre les deux conduits de même qu'entre chaque conduit avec, d'une part, la structure du véhicule et, d'autre part, le moteur. Les deux conduits sont jumelés plus ou moins rigidement sur un tronçon de leur longueur respective par un raccord, ce raccord pouvant être solidaire d'un élément de structure fixe dans un véhicule automobile.

On vient ainsi jumeler les conduits et fixer rigidement cet ensemble à un élément de la structure du véhicule, de telle sorte à pouvoir se passer des différents jeux de débattement d'une part entre les deux conduits, et d'autre part entre les deux conduits et la structure du véhicule, avec un gain en compacité de l'ordre de par exempple 40 à 50 mm. Ce gain est loin d'être négligeable, et permet d'obtenir un gain de place permettant d'implanter sur le moteur thermique d'autres organes, et notamment une machine électrique pour les motorisations hybrides, et notamment celles dites « Mild Hybrid ».

Le jumelage des deux conduits d'air permet de ne pas prédisposer un jeu de débattement entre les deux conduits en les collant l'un à l'autre, ce qui permet de ne plus avoir qu'une épaisseur de paroi entre les deux veines d'air interne respectives des deux conduits. Dans un mode de réalisation, il peut donc être escompté un gain en encombrement de 30mm.

Avantageusement, les deux conduits sont adjacents dans le raccord en s'étendant sensiblement parallèlement l'un à l'autre et en n'étant séparés l'un de l'autre que par leurs parois. Le fait d'appliquer l'un contre l'autre les deux conduits permet de gagner encore de la place dans l'environnement du groupe motopropulseur. L'ensemble des deux conduits et de leur raccord est en effet ainsi encore plus compact.

Avantageusement, le raccord est en matière plastique thermoformée ou soufflée. Ceci permet de changer les formes du raccord et des conduits, notamment la section des conduits, si nécessaire.

Avantageusement, au moins un conduit présente une section dans le raccord différente de celle du reste dudit conduit. La réalisation du raccord, par exemple en plastique thermoformé ou soufflé, permet de réaliser les formes optimales au niveau des sections de passage critiques induites par le confinement dans l'environnement direct de l'ensemble des deux conduits et de leur raccord. Une section classique circulaire pour au moins un conduit peut être remplacée par une section d'un autre type plus avantageuse pour l'écoulement d'air au niveau du raccord.

Avantageusement, au moins les extrémités des conduits destinées à déboucher vers le moteur à combustion interne ou vers le turbocompresseur portent chacune des soufflets. Comme les deux conduits sont destinés à être solidarisés chacun, d'une part, avec le moteur ou le turbocompresseur solidarisé au moteur effectuant des débattements et, d'autre part, avec un refroidisseur d'air de suralimentation fixe par rapport à une structure de véhicule, il est avantageux de prévoir une mobilité limitée des conduits par rapport au moteur. Ceci est obtenu avantageusement par les soufflets qui peuvent offrir une possibilité de déplacement des conduits par rapport au moteur ou au turbocompresseur.

Avantageusement, un conduit d'entrée d'air parmi les deux conduits relie le refroidisseur d'air de suralimentation à une entrée d'un boîtier papillon présent dans le moteur à combustion interne et l'autre conduit des deux conduits est un conduit de sortie d'air reliant le turbocompresseur au refroidisseur d'air de suralimentation.

Avantageusement, le turbocompresseur est disposé sur une face supérieure du moteur à combustion interne.

Avantageusement, la structure fixe est un renfort appui de façade, le raccord présentant une plaque d'appui appliquée contre le renfort appui de façade, notammenr de façade de refroidissement, perpendiculairement au renfort appui de façade.

Avantageusement, grâce à l'invention, on peut adapter la formes des deux conduits, notamment leur donner des formes de sections suffisantes, mais surtout adaptées à la place disponible dans l'environnement du compartiment avant du véhicule, et de fixer rigidement ce sous ensemble à un élément fixe du véhicule, en l'occurrence ici un appui de façade de refroidissement.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique en perspective d'un groupe motopropulseur turbocompressé avec deux conduits d'air reliant dans deux directions d'écoulement d'air opposées le groupe motopropulseur avec un refroidisseur d'air de suralimentation, selon l'état de la technique,

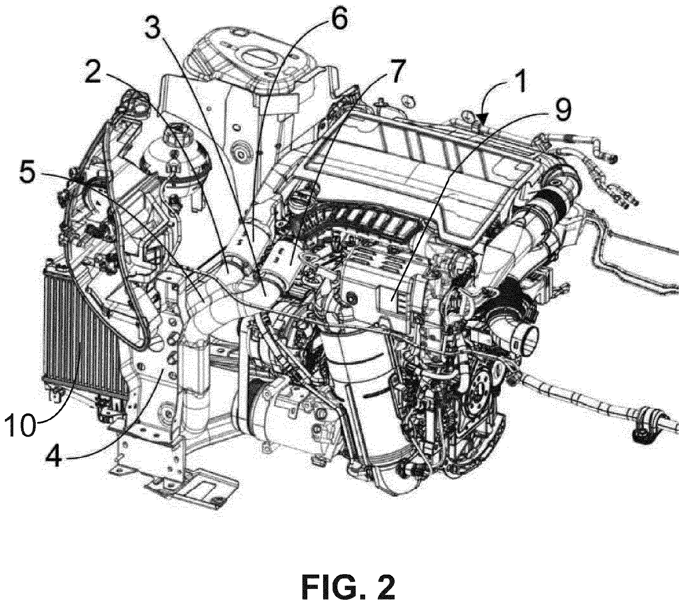

- la figure 2 est une représentation schématique en perspective d'un groupe motopropulseur turbocompressé avec deux conduits d'air reliant dans deux directions d'écoulement d'air opposées le groupe motopropulseur avec un refroidisseur d'air de suralimentation, selon la présente invention, deux tronçons en vis-à-vis des deux conduits étant jumelés par un raccord sur une portion de leur longueur,

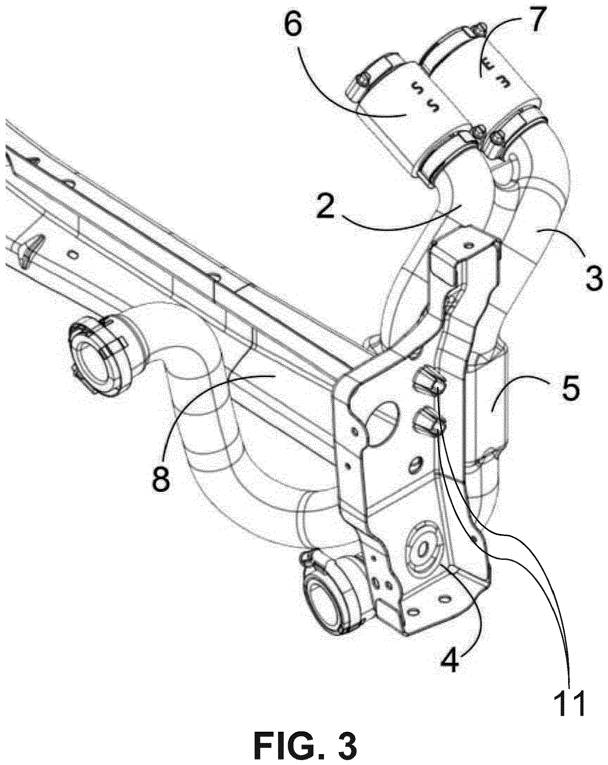

- la figure 3 est une représentation schématique en perspective selon la présente invention deux conduits jumelés par un raccord en formant un ensemble selon la présente invention ainsi que la fixation du raccord sur une structure du véhicule automobile, les autres éléments du véhicule ayant été ôtés à cette figure,

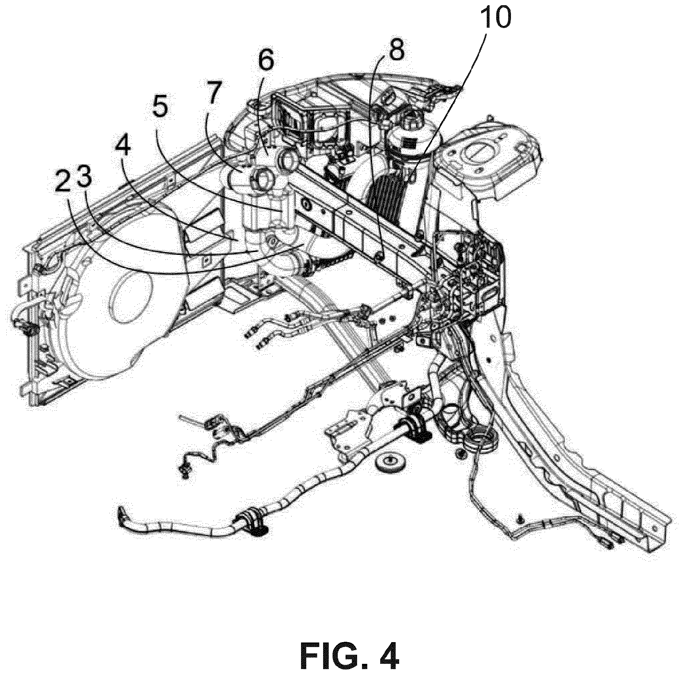

- la figure 4 est une représentation schématique d'une vue de dessus en perspective d'une structure de véhicule automobile portant les deux conduits jumelés par un raccord en formant un ensemble selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures et notamment aux figures 2 à 4, l'invention concerne un ensemble de deux conduits 2, 3 avec circulation d'air opposée dans un conduit par rapport à l'autre conduit. Les conduits 2, 3 sont destinés à s'étendre dans leur longueur entre un moteur 1 à combustion interne et un refroidisseur d'air 10 de suralimentation en étant assemblés à leurs extrémités respectivement au moteur 1 à combustion interne et au refroidisseur d'air 10, le refroidisseur d'air 10 de suralimentation étant particulièrement bien visible à la figure 4.

Un premier conduit est un conduit d'entrée 3 d'air dans le moteur 1 et un deuxième conduit est un conduit de sortie 2 d'air du moteur 1, plus précisément d'un turbocompresseur 9 solidarisé au moteur 1 en direction du refroidisseur d'air 10 de suralimentation. Le premier conduit 3 s'étend sensiblement parallèlement au deuxième conduit 2 au moins partiellement sur un tronçon du premier conduit 3 par rapport à un tronçon du deuxième conduit 2.

Selon la présente invention, les deux conduits 2, 3 présentent sur un tronçon de leur longueur un raccord 5 commun les solidarisant ensemble. Le raccord 5 commun peut entourer les deux conduits 2, 3 en présentant une surface extérieure polygonale relativement plane. Le raccord 5 peut par exemple être disposé sur des tronçons des conduits 2, 3 s'étendant sensiblement à mi-longueur des conduits 2, 3.

Le raccord 5 entoure un tronçon du premier conduit d'entrée 3 d'air au moteur 1 ainsi qu'un tronçon du deuxième conduit de sortie 2 d'air du moteur 1 ou d'un élément solidarisé au moteur 1 comme un turbocompresseur 9 vers un élément tel que le refroidisseur d'air 10 de suralimentation. Le rapprochement des deux conduits 2, 3 d'air l'un par rapport à l'autre du fait du raccord 5 sur des tronçons adjacents des deux conduits 2, 3 permet de ne pas prédisposer un jeu de débattement entre les deux conduits 2, 3, ceci avantageusement en les collant l'un à l'autre, de même qu'entre des éléments extérieurs à l'ensemble proches du raccord 5.

Les deux conduits 2, 3 peuvent être adjacents dans le raccord 5 en s'étendant sensiblement parallèlement l'un à l'autre et en n'étant séparés l'un de l'autre que par leurs parois respectives. Ainsi les deux conduits 2, 3 et le raccord 5 présentent un encombrement minimal en ne présentant qu'une épaisseur de paroi entre les deux conduits 2, 3 d'air internes au raccord 5. Le raccord 5 peut être en matière plastique thermoformée ou soufflée.

Au moins un conduit présente une section dans le raccord 5 différente de celle du reste dudit conduit. Ceci n'est pas montré visible aux figures. Le raccord 5 est avantageusement disposé sur les conduits 2, 3 à un endroit qui est dans un environnement sollicitant que les conduits 2, 3 occupent le moins de place possible ou dans un endroit pour lequel la configuration des conduits 2, 3 fait que la circulation d'air peut être gênée dans ces conduits 2, 3.

En général, la section des conduits 2, 3 est circulaire mais peut être autre dans une zone de confinement à encombrement réduit. Ceci est facilité par le fait que le raccord 5 est en plastique thermoformée ou soufflée. Ceci permet de réaliser les formes optimales au niveau des sections de passage critiques induites par le confinement de l'environnement direct, tout en respectant les valeurs minimales des sections, jusqu'alors de forme constamment circulaire.

C'est pour cela que la section des conduits 2, 3 au niveau du raccord 5 peut être différente de la section dans le reste de chaque conduit afin d'améliorer la circulation d'air. Les zones de conduits 2, 3 d'air les moins contraintes peuvent cependant demeurer de forme circulaire.

Au moins les extrémités des conduits 2, 3 destinées à déboucher vers le moteur 1 à combustion interne ou vers le turbocompresseur 9 peuvent porter chacune des soufflets 6, 7. En effet, les conduits 2, 3 d'air sont soumis à de contraintes thermiques et des contraintes mécaniques du fait des débattements du moteur 1 et du turbocompresseur 9 solidarisé au moteur 1 qui peuvent influer sur leur forme. Les soufflets 6, 7 des conduits 2, 3 sont particulièrement bien visibles à la figure 3.

Les contraintes thermiques sont principalement liées aux températures d'air de suralimentation. Comme ce problème est déjà reconnu, le raccord 5 selon la présente invention sera avantageusement en une matière déjà utilisée pour d'autres raccords 5 remplissant ce type de fonction.

Les contraintes mécaniques sont essentiellement liées aux débattements du groupe motopropulseur dont le moteur 1 à combustion interne fait partie, le turbocompresseur 9 étant solidarisé au moteur 1 à combustion interne et suivant dans ses débattements le moteur 1 à combustion interne. Le refroidisseur d'air 10 de suralimentation refroidissant l'air avant son admission dans le moteur 1 à combustion interne est disposé à distance du moteur 1 en étant fixé au véhicule et donc en ne suivant pas les débattements du moteur 1 à combustion interne.

Les contraintes mécaniques, provoquées par les débattements du moteur 1 à combustion interne relié directement ou indirectement par un turbocompresseur 9, à des extrémités des deux conduits 2, 3 tandis que les autres extrémités des conduits 2, 3 sont reliés au refroidisseur d'air 10 de suralimentation quant à lui fixe, peuvent être absorbées par les deux soufflets 6, 7 de découplage précédemment mentionnés prévus à cet effet et avantageusement situés en pointant vers la partie supérieure ou médiane du moteur 1.

L'invention concerne aussi un groupe motopropulseur comprenant un moteur 1 à combustion interne, un turbocompresseur 9 solidarisé à un moteur 1 à combustion interne et un refroidisseur d'air 10 de suralimentation disposé à distance du moteur 1 à combustion interne.

Une circulation d'air est prévue entre le moteur 1 à combustion interne ou le turbocompresseur 9 et le refroidisseur d'air 10 de suralimentation par des conduits 2, 3 dans lesquels l'air circule dans des directions opposées. Dans ce groupe motopropulseur, les conduits 2, 3 et leur raccord 5 entourant des tronçons des conduits 2, 3 font partie d'un ensemble tel que décrit précédemment.

Comme précédemment mentionné, en tant que premier conduit, un conduit d'entrée 3 d'air parmi les deux conduits 2, 3 relie le refroidisseur d'air 10 de suralimentation à une entrée d'un boîtier papillon présent dans le moteur 1 à combustion interne. Le deuxième conduit des deux conduits 2, 3 est un conduit de sortie 2 d'air reliant le turbocompresseur 9 au refroidisseur d'air 10 de suralimentation. Comme il peut être vu notamment à la figure 2, le turbocompresseur 9 peut être disposé sur une face supérieure du moteur 1 à combustion interne.

L'invention concerne enfin un véhicule automobile comportant un tel groupe motopropulseur. Dans ce véhicule, le raccord 5 des conduits 2, 3 est solidarisé à une structure fixe 8 du véhicule par des fixations 11 amovibles ou non, du type vis, éléments d'encliquetage ou embouts sapins, ces fixations étant particulièrement bien visibles à la figure 3.

Ceci est notamment visible aux figures 3 et 4. La structure fixe 8 peut être un renfort appui de façade, le raccord 5 de conduits 2, 3 présentant une plaque d'appui 4 appliquée contre le renfort appui de façade, ceci en s'étendant perpendiculairement au renfort appui de façade.

L'invention n'est nullement limitée aux modes de réalisation décrits et illustrés qui n'ont été donnés qu'à titre d'exemples.

## Revendications

1. Véhicule automobile comportant un groupe motopropulseur comprenant un moteur (1) à combustion interne, un turbocompresseur (9) solidarisé à un moteur (1) à combustion interne et un refroidisseur d'air (10) de suralimentation disposé à distance du moteur (1) à combustion interne, une circulation d'air étant prévue entre le moteur (1) à combustion interne ou le turbocompresseur (9) et le refroidisseur d'air (10) de suralimentation par deux conduits (2, 3) dans lesquels l'air circule dans des directions opposées, et comprenant un raccord (5) permettant de solidariser ensemble les deux conduits (2, 3) sur un tronçon de leur longueur, **caractérisé en ce que** le raccord (5) permet de solidariser ensemble les deux conduits (2, 3) en les collant l'un à l'autre, ledit raccord (5) étant solidarisé à une structure fixe (8) du véhicule par des fixations (11) amovibles ou non, du type vis, éléments d'encliquetage ou embouts sapins.

2. Véhicule automobile selon la revendication 1, dans lequel les deux conduits (2, 3) sont adjacents dans le raccord (5) en s'étendant sensiblement parallèlement l'un à l'autre et en n'étant séparés l'un de l'autre que par leurs parois.

3. Véhicule automobile selon la revendication 1 ou 2, dans lequel le raccord (5) est en matière plastique thermoformée ou soufflée.

4. Véhicule automobile selon l'une quelconque des revendications précédentes, dans lequel au moins un conduit (2, 3) présente une section dans le raccord (5) différente de celle du reste dudit conduit (2, 3).

5. Véhicule automobile selon l'une quelconque des revendications précédentes, dans lequel au moins les extrémités des conduits (2, 3) destinées à déboucher vers le moteur (1) à combustion interne ou le turbocompresseur (9) portent chacune des soufflets (6, 7).

6. Véhicule automobile selon l'une quelconque des revendications précédentes, dans lequel un conduit d'entrée (3) d'air parmi les deux conduits (2, 3) relie le refroidisseur d'air (10) de suralimentation à une entrée d'un boîtier papillon présent dans le moteur (1) à combustion interne et l'autre conduit des deux conduits (2, 3) est un conduit de sortie (2) d'air reliant le turbocompresseur (9) au refroidisseur d'air (10) de suralimentation.

7. Véhicule automobile selon l'une quelconque des revendications précédentes, dans lequel le turbocompresseur (9) est disposé sur une face supérieure du moteur (1) à combustion interne.

8. Véhicule automobile selon l'une quelconque des revendications précédentes, dans lequel la structure fixe (8) est un renfort appui de façade, le raccord (5) présentant une plaque d'appui (4) appliquée contre le renfort appui de façade perpendiculairement au renfort appui de façade.

## Patentansprüche

1. Kraftfahrzeug, das ein Antriebsaggregat umfasst, das einen Verbrennungsmotor (1), einen Turboverdichter (9), der fest mit einem Verbrennungsmotor (1) verbunden ist, und einen Ladeluftkühler (10), der von dem Verbrennungsmotor (1) beabstandet angeordnet ist, umfasst, wobei eine Luftströmung zwischen dem Verbrennungsmotor (1) oder dem Turboverdichter (9) und dem Ladeluftkühler durch zwei Leitungen (2, 3) vorgesehen ist, in welchen die Luft in entgegengesetzte Richtungen strömt, und das einen Anschluss (5) umfasst, der es erlaubt, die zwei Leitungen (2, 3) fest auf einem Abschnitt ihrer Länge zu verbinden, **dadurch gekennzeichnet, dass** der Anschluss (5) es erlaubt, die zwei Leitungen (2, 3) fest miteinander zu verbinden, indem sie aneinander geklebt sind, wobei der Anschluss (5) mit einer stationären Struktur (8) des Fahrzeugs durch Befestigungen (11), die abnehmbar sind oder nicht, vom Typ Schraube, Einrastelement oder Lamellenfuß fest verbunden ist.

2. Kraftfahrzeug nach Anspruch 1, wobei die zwei Leitungen (2, 3) in dem Anschluss (5) nebeneinanderliegen und sich im Wesentlichen parallel zueinander und nur durch ihre Wände voneinander getrennt erstrecken.

3. Kraftfahrzeug nach Anspruch 1 oder 2, wobei der Anschluss (5) aus wärmegeformtem oder geblasenem Kunststoff besteht.

4. Kraftfahrzeug nach einem der vorstehenden Ansprüche, wobei mindestens eine Leitung (2, 3) einen Querschnitt in dem Anschluss (5) aufweist, der von dem Rest der Leitung (2, 3) unterschiedlich ist.

5. Kraftfahrzeug nach einem der vorstehenden Ansprüche, wobei mindestens die Enden der Leitungen (2, 3), die dazu bestimmt sind, zu dem Verbrennungsmotor (1) oder dem Turbokompressor (9) zu münden, jeweils Bälge (6, 7) tragen.

6. Kraftfahrzeug nach einem der vorstehenden Ansprüche, wobei die Lufteinlassleitung (3) unter den zwei Leitungen (2, 3) den Ladeluftkühler (10) mit einem Einlass eines Drosselklappengehäuses verbindet, das in dem Verbrennungsmotor (1) vorhanden ist, und die andere Leitung der zwei Leitungen (2, 3) eine Luftausgangsleitung (2) ist, die den Turboverdichter (9) mit dem Ladeluftkühler (10) verbindet.

7. Kraftfahrzeug nach einem der vorstehenden Ansprüche, wobei der Turboverdichter (9) auf einer oberen Fläche des Verbrennungsmotors (1) angeordnet ist.

8. Kraftfahrzeug nach einem der vorstehenden Ansprüche, wobei die stationäre Struktur (8) eine Fassadenauflageverstärkung ist, wobei der Anschluss (5) eine Auflageplatte (4) aufweist, die an die Fassadenauflageverstärkung senkrecht zu der Fassadenauflageverstärkung angelegt ist.

## Claims

1. A motor vehicle comprising a power train including an internal combustion engine (1), a turbocharger (9) secured to an internal combustion engine (1) and a charge air cooler (10) disposed at a distance from the internal combustion engine (1), a flow of air being provided between the internal combustion engine (1) or the turbocharger (9) and the charge air cooler (10) by two conduits (2, 3) in which the air flows in opposite directions, and including a connection (5) permitting the two conduits (2, 3) to be secured together on a portion of their length, **characterized in that** the connection (5) permits the two conduits (2, 3) to be secured together by bonding them to one another, said connection (5) being secured to a fixed structure (8) of the vehicle by fastenings (11) which are detachable or non-detachable, of the screw type, detent elements or furrowed nipples.

2. The motor vehicle according to Claim 1, in which the two conduits (2, 3) are adjacent in the connection (5), extending substantially parallel to one another and only being separated from one another by their walls.

3. The motor vehicle according to Claim 1 or 2, in which the connection (5) is made of thermoformed or blow-moulded plastic material.

4. The motor vehicle according to any one of the preceding claims, in which at least one conduit (2, 3) has a section in the connection (5) which is different to that of the remainder of said conduit (2, 3).

5. The motor vehicle according to any one of the preceding claims, in which at least the ends of the conduits (2, 3) intended to lead out towards the internal combustion engine (1) or the turbocharger (9) each carry bellows (6, 7).

6. The motor vehicle according to any one of the preceding claims, in which an air inlet conduit (3) of the two conduits (2, 3) connects the charge air cooler (10) at an inlet of a throttle body present in the internal combustion engine (1) and the other conduit of the two conduits (2, 3) is an air outlet conduit (2) connecting the turbocharger (9) to the charge air cooler (10).

7. The motor vehicle according to any one of the preceding claims, in which the turbocharger (9) is disposed on an upper face of the internal combustion engine (1).

8. The motor vehicle according to any one of the preceding claims, in which the fixed structure (8) is a front support reinforcement, the connection (5) having a support plate (4) applied against the front support reinforcement perpendicularly to the front support reinforcement.
